# EUROPEAN PATENT APPLICATION

(11) **EP 4 585 342 A1**
(43) Date of publication of application: **16.07.2025**
(21) Application number: 22962804.5
(22) Date of filing: 21.10.2022
(51) Int. Cl.: B23H 7/02, B23H 1/10, B23H 7/36

(54) **WIRE ELECTRIC DISCHARGE MACHINING SYSTEM**

(71) Applicant: FANUC CORPORATION, Oshino-mura Minamitsuru-gun Yamanashi 401-0597 (JP)
(72) Inventor: KOUDA, Hisanori, Minamitsuru-gun, Yamanashi 401-0597 (JP)
(74) Representative: Keil & Schaafhausen Patentanwälte PartGmbB
(86) International application number: PCT/JP2022/039342
(87) International publication number: WO 2024/084697

(57) **Abstract**

According to an embodiment of the present disclosure, a wire electric discharge machining system, having a wire electric discharge machining device body that generates an electric discharge in an electrode gap between a wire electrode and a machining object in a machining liquid stored in a machining tank, comprises a temperature adjustment device that adjusts the machining liquid temperature of the machining liquid, a temperature sensor that measures the body temperature of the wire electric discharge machining device body, and a temperature control device that controls the temperature adjustment device to adjust the machining liquid temperature to a target temperature that is in accordance with the body temperature.

## Description

### TECHNICAL FIELD

The present disclosure relates to a wire electric discharge machining system.

### BACKGROUND ART

JP 2012-200854 A discloses a wire electric discharge machine.

### SUMMARY OF THE INVENTION

Further improvement of machining accuracy is awaited.

A wire electric discharge machining system comprises a wire electric discharge machine body for machining a workpiece by generating electric discharge at an interelectrode gap between a wire electrode and the workpiece in dielectric working fluid stored in a work-pan, the system comprising: a temperature regulator configured to regulate the dielectric working fluid temperature of the dielectric working fluid; a temperature sensor configured to measure the body temperature of the wire electric discharge machine body; and a temperature controller configured to control the temperature regulator to regulate the dielectric working fluid temperature to a target temperature corresponding to the body temperature.

### BRIEF DESCRIPTION OF DRAWINGS

[FIG. 1] FIG. 1 is a graph showing an example of a temperature change in a body temperature and a room temperature of a wire electric discharge machine body over time;
[FIG. 2] FIG. 2 illustrates a wire electric discharge machining system according to an embodiment;
[FIG. 3] FIG. 3 is a block diagram illustrating a configuration of a temperature control device;
[FIG. 4] FIG. 4A, FIG. 4B, FIG. 4C, and FIG. 4D are diagrams illustrating the state where a temperature sensor is attached to a wire electric discharge machine body;
[FIG. 5] FIG. 5 is a flowchart showing an example of a processing procedure for temperature control of a dielectric working fluid;
[FIG. 6] FIG. 6 shows two temperature sensors coupled to a wire electric discharge machine body;
[FIG. 7] FIG. 7 is a flowchart showing an example of a processing procedure for temperature control of a dielectric working fluid in a first modification;
[FIG. 8] FIG. 8 is a flowchart showing another example of a processing procedure for temperature control of a dielectric working fluid in the first modification;
[FIG. 9] FIG. 9 is a diagram showing a state in which temperature sensors are coupled, in correspondence with a plurality of relative drive mechanisms, to a wire electric discharge machine body;
[FIG. 10] FIG. 10 is a block diagram illustrating a configuration of a temperature control device; and
[FIG. 11] FIG. 11 is a flowchart showing an example of a processing procedure for temperature control of a dielectric working fluid in a second modification.

### DETAILED DESCRIPTION OF THE INVENTION

The body temperature of a wire electric discharge machine body changes following the change in the room temperature of a room where the wire electric discharge machine body is installed. The wire electric discharge machine body includes a member that is manufactured as a casting. The heat capacity of a casting is different from that of air. Therefore, when a rapid change in the room temperature occurs, the body temperature of the wire electric discharge machine body may be unable to immediately follow the change in the room temperature. In this case, the body temperature of the wire electric discharge machine body does not match the room temperature and thus a gap occurs between them.

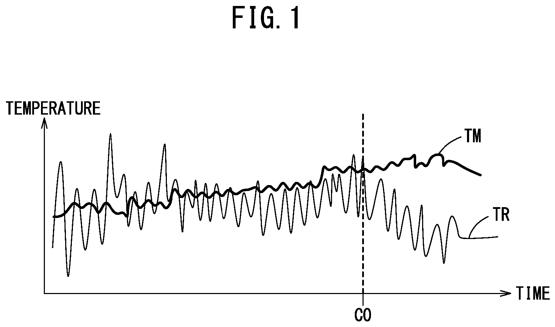

FIG. 1 is a graph TR and a graph TM showing an example of temperature changes in the room temperature and the body temperature of the wire electric discharge machine body over time. In the example shown in FIG. 1, the room temperature drops sharply after time C0 as indicated by the graph TR. However, after time C0, there is a time lag before the body temperature of the wire electric discharge machine body starts to decrease, as indicated by the graph TM. Therefore, after time C0, there is a period in which the body temperature of the wire electric discharge machine body and the room temperature are different.

In a conventional wire electric discharge machining system, the dielectric working fluid temperature of the dielectric working fluid is regulated to room temperature. The temperature of the workpiece immersed in the dielectric working fluid becomes equal to the room temperature. The body temperature of the wire electric discharge machine body that relatively moves the workpiece and the wire electrode during electric discharge machining may be different from the room temperature as described above. Castings contained in the wire electric discharge machine body may be thermally deformed. A wire electric discharge machine body with temperature different from room temperature performs electric discharge machining while relatively moving the wire electrode and the workpiece with temperature equal to room temperature. Therefore, the machining accuracy of electric discharge machining may be reduced.

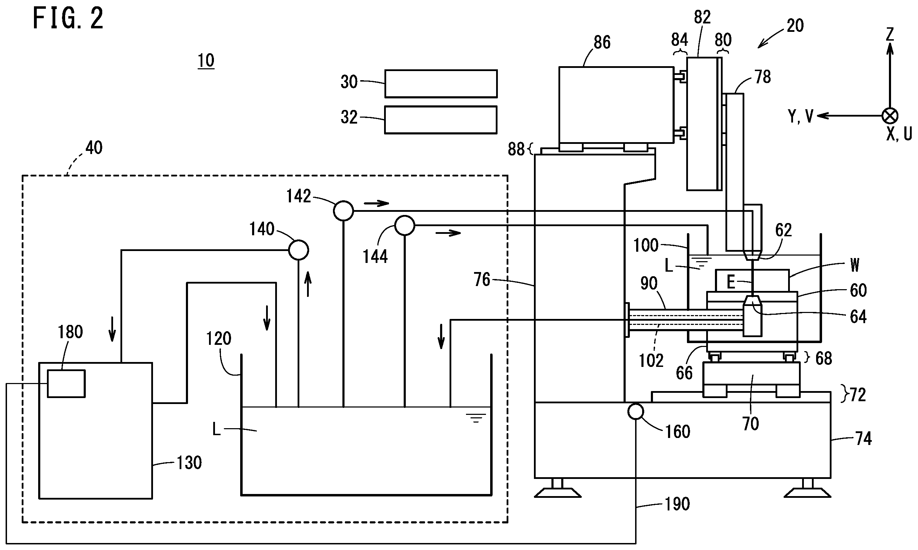

FIG. 2 illustrates a wire electric discharge machining system 10 according to an embodiment. The wire electric discharge machining system 10 in the present embodiment includes a wire electric discharge machine body 20, a machining power source 30, a machining controller 32, and a circulating treatment device 40. The machining power source 30 applies a pulse-like voltage to an interelectrode gap formed by a wire electrode E and a workpiece W to generate electric discharge. The wire electric discharge machine body 20 performs electric discharge machining on the workpiece W by the electric discharge generated at the interelectrode gap.

The machining controller 32 includes a processor (not shown). The processor executes a machining program stored in memory (not shown). The machining controller 32 controls the machining power source 30 to apply voltage to the above-mentioned interelectrode gap and controls the wire electric discharge machine body 20 to relatively move the wire electrode E and the workpiece W according to the machining program. Thus, the workpiece W is subjected to electric discharge machining.

The electric discharge machining performed by the wire electric discharge machine body 20 is performed in a state where the workpiece W is immersed in dielectric working fluid L. The circulating treatment device 40 circulates the dielectric working fluid L in the wire electric discharge machining system 10.

The wire electric discharge machine body 20 is arranged in the XYZ space composed of the X-, Y- and Z-axes shown in FIG. 2. The X direction, in which the X axis extends, the Y direction, in which the Y axis extends, and the Z direction, in which the Z axis extends, intersect each other. In this embodiment, the X, Y and Z axes are orthogonal to each other. -Z direction is the direction of gravity. The wire electric discharge machine body 20 has a worktable 60. The workpiece W is supported on the worktable 60.

The wire electric discharge machine body 20 further includes an upper wire guide 62 and a lower wire guide 64. The upper wire guide 62 supports the wire electrode E above the worktable 60 and the workpiece W (in the +Z direction). The lower wire guide 64 supports the wire electrode E below the worktable 60 (in the -Z direction).

The wire electrode E is supplied from a wire bobbin (not shown) in the delivery direction at a predetermined speed. The wire electrode E is delivered via the upper wire guide 62, the workpiece W, and the lower wire guide 64. The wire electrode E that has passed through the lower wire guide 64 is collected by a collection box (not shown).

While electrical discharge machining is performed, the machining controller 32 moves the workpiece W relative to the wire electrode E along the machining path specified by the machining program. In this embodiment, the relative movement between the wire electrode E and the workpiece W is performed by moving the worktable 60 in the X and Y directions. The wire electric discharge machine body 20 further includes an X-axis table 66, a first relative drive mechanism 68, a Y-axis table 70, a second relative drive mechanism 72, a bed 74, and a column 76. In this embodiment, the worktable 60 is attached to a work-pan 100, which will be described later, and the work-pan 100 moves in the X and Y directions.

The X-axis table 66 is movable in the X direction with respect to the Y-axis table 70, the bed 74, and the column 76. The worktable 60 moves in the X direction together with the X-axis table 66. The first relative drive mechanism 68 is driven, whereby the first relative drive mechanism 68 moves the X-axis table 66. The first relative drive mechanism 68 includes, for example, a guide rail, a guide block, a nut, a ball screw, and a motor. The first relative drive mechanism 68 thus configured relatively moves the wire electrode E and the workpiece W in the X direction.

The first relative drive mechanism 68 is supported by the Y-axis table 70. That is, the Y-axis table 70 is a supporting portion of the first relative drive mechanism 68. The Y-axis table 70 is movable in the Y direction with respect to the bed 74 and the column 76. The X-axis table 66 and the worktable 60 move in the Y-direction together with the Y-axis table 70.

The second relative drive mechanism 72 is driven, whereby the second relative drive mechanism 72 moves the Y-axis table 70. The second relative drive mechanism 72 includes, for example, a guide rail, a guide block, a nut, a ball screw, and a motor. The second relative drive mechanism 72 thus configured relatively moves the wire electrode E and the workpiece W in the Y direction.

The second relative drive mechanism 72 is supported by the bed 74. That is, the bed 74 is a supporting portion of the second relative drive mechanism 72. The bed 74 is a base of the wire electric discharge machine body 20. The bed 74 further supports the column 76 that stands on the bed 74.

In this embodiment, the upper wire guide 62 is movable in the X and Y directions during electrical discharge machining on the workpiece W. The movement of the upper wire guide 62 in the X direction is performed independently of the movement of the worktable 60 in the X direction. For this reason, the movement of the upper wire guide 62 in the X direction is referred to as the movement in the U direction. The movement of the upper wire guide 62 in the Y direction is performed independently of the movement of the worktable 60 in the Y direction. For this reason, the movement of the upper wire guide 62 in the Y direction is referred to as the movement in the V direction. The upper wire guide 62 moves in the U direction or the V direction, thereby enabling the taper processing of the workpiece W.

The wire electric discharge machine body 20 further includes a Z-axis slider 78, a third relative drive mechanism 80, a U-axis saddle 82, a fourth relative drive mechanism 84, a V-axis saddle 86, and a fifth relative drive mechanism 88. The upper wire guide 62 is attached to the Z-axis slider 78. The Z-axis slider 78 is relatively movable in the Z direction with respect to the U-axis saddle 82, the V-axis saddle 86, the bed 74, and the column 76.

The upper wire guide 62 moves in the Z direction together with the Z-axis slider 78. The third relative drive mechanism 80 is driven, whereby the third relative drive mechanism 80 moves the Z-axis slider 78. The third relative drive mechanism 80 includes, for example, a guide rail, a guide block, a nut, a ball screw, and a motor. The third relative drive mechanism 80 thus configured relatively moves the upper wire guide 62 and the lower wire guide 64 in the Z direction.

The third relative drive mechanism 80 is supported by the U-axis saddle 82. That is, the U-axis saddle 82 is a supporting portion of the third relative drive mechanism 80. The U-axis saddle 82 is movable in the U direction with respect to the V-axis saddle 86, the bed 74, and the column 76. The Z-axis slider 78 and the upper wire guide 62 move in the U direction with the U-axis saddle 82.

The fourth relative drive mechanism 84 is driven, whereby the fourth relative drive mechanism 84 moves the U-axis saddle 82. The fourth relative drive mechanism 84 includes, for example, a guide rail, a guide block, a nut, a ball screw, and a motor. The fourth relative drive mechanism 84 thus configured relatively moves the upper wire guide 62 and the lower wire guide 64 in the U direction (X direction). Thereby, the wire electrode E and the workpiece W are relatively moved in the rotational direction about the Y-axis.

The fourth relative drive mechanism 84 is supported by a V-axis saddle 86. That is, the V-axis saddle 86 is a supporting portion of the fourth relative drive mechanism 84. The V-axis saddle 86 is movable in the V direction with respect to the bed 74 and the column 76. The U-axis saddle 82, the Z-axis slider 78, and the upper wire guide 62 move in the V direction with the V-axis saddle 86.

The fifth relative drive mechanism 88 drives the V-axis saddle 86 to relatively move the V-axis saddle 86. The fifth relative drive mechanism 88 includes, for example, a guide rail, a guide block, a nut, a ball screw, and a motor. The fifth relative drive mechanism 88 thus configured relatively moves the upper wire guide 62 and the lower wire guide 64 in the V direction (Y direction). Thereby, the wire electrode E and the workpiece W are relatively moved in the rotational direction about the X-axis.

The fifth relative drive mechanism 88 is supported by a column 76 standing on the bed 74. That is, the V-axis saddle 86 is a supporting portion of the column 76.

The wire electric discharge machine body 20 further includes an arm 90 and a machining bath 100. The arm 90 is connected to the column 76 and the lower wire guide 64. That is, the arm 90 supports the lower wire guide 64. The arm 90 supports the wire electrode E via the lower wire guide 64. The arm 90 encloses a flow path 102 into which the dielectric working fluid L flows. The wire electrode E that has passed through the lower wire guide 64 is collected into the collection box (not shown) through the arm 90.

The work-pan 100 is movable in the X direction and the Y direction in accordance with the movement of the X-axis table 66 and the Y-axis table 70. The work-pan 100 stores the dielectric working fluid L. The worktable 60, the workpiece W, the upper wire guide 62, and the lower wire guide 64 are immersed in the dielectric working fluid L. During the electrical discharge machining, the dielectric working fluid L is sprayed from the upper wire guide 62 to the interelectrode gap. The dielectric working fluid L may be sprayed from the lower wire guide 64 to the interelectrode gap.

The circulating treatment device 40 performs a treatment on the dielectric working fluid L drained from the work-pan 100 to adjust the dielectric working fluid temperature of the dielectric working fluid L and returns the dielectric working fluid L to the work-pan 100. The circulating treatment device 40 includes a reservoir 120, a temperature regulator 130, a first pump 140, a second pump 142, and a third pump 144. The reservoir 120 stores the dielectric working fluid L discharged from the work-pan 100 via the flow path 102 in the arm 90. The temperature regulator 130 regulates the dielectric working fluid temperature of the dielectric working fluid L by heating or cooling the dielectric working fluid L.

The first pump 140 supplies the dielectric working fluid L in the reservoir 120 from the reservoir 120 to the temperature regulator 130. The dielectric working fluid L whose dielectric working fluid temperature has been adjusted by the temperature regulator 130 returns from the temperature regulator 130 to the reservoir 120.

As described above, during the electrical discharge machining, the dielectric working fluid L is sprayed from the upper wire guide 62 to the interelectrode gap. The second pump 142 returns the dielectric working fluid L that has been returned to the reservoir 120 to have the dielectric working fluid temperature adjusted, to the work-pan 100 by jetting the dielectric working fluid L from the upper wire guide 62 to the interelectrode gap. The third pump 144 directly returns to the work-pan 100 the dielectric working fluid L that has been returned to the reservoir 120 to have dielectric working fluid temperature adjusted.

The reservoir 120 may be a clean reservoir for storing clean dielectric working fluid L. In this case, a contamination tank for storing the dielectric working fluid L contaminated by machining chips (sludge) is provided separately from the reservoir 120. The dielectric working fluid L discharged from the work-pan 100 via the flow path 102 in the arm 90 is contaminated and thus is collected to the contamination tank. The dielectric working fluid L collected in the contamination tank is purified by filtering the machining chips and then transferred to the reservoir 120 by a pump (not shown). The temperature regulator 130 is supplied with clean dielectric working fluid L.

The wire electric discharge machining system 10 further includes a temperature sensor 160. The temperature sensor 160 is coupled to the wire electric discharge machine body 20. The temperature sensor 160 measures the body temperature of the wire electric discharge machine body 20. The temperature sensor 160 is coupled, among members included in the wire electric discharge machine body 20, to a member manufactured as a casting or to a relative drive mechanism supported by the member manufactured as the casting.

The member manufactured as a casting includes, for example, the X-axis table 66, the Y-axis table 70, the bed 74, the column 76, the U-axis saddle 82, and the V-axis saddle 86. The relative drive mechanism supported by these members includes the first relative drive mechanism 68, the second relative drive mechanism 72, the fourth relative drive mechanism 84, and the fifth relative drive mechanism 88. Accordingly, the temperature sensor 160 may be coupled to any of the following members: the X-axis table 66, the first relative drive mechanism 68, the Y-axis table 70, the second relative drive mechanism 72, the bed 74, the column 76, the U-axis saddle 82, the fourth relative drive mechanism 84, the V-axis saddle 86, and the fifth relative drive mechanism 88.

In this embodiment, the temperature sensor 160 is coupled to the bed 74. A temperature controller 180 that controls the temperature regulator 130 is disposed in the temperature regulator 130. The temperature controller 180 may be placed outside the temperature regulator 130 and control the temperature regulator 130 via wired or wireless communication.

The temperature controller 180 acquires the temperature information of the body temperature of the wire electric discharge machine body 20 from the temperature sensor 160 via a communication cable 190. The temperature controller 180 controls the temperature regulator 130 to adjust the dielectric working fluid temperature of the dielectric working fluid L to a target temperature corresponding to the body temperature of the wire electric discharge machine body 20. In this embodiment, the target temperature is equal to the body temperature of the wire electric discharge machine body 20. The temperature regulator 130 regulates the dielectric working fluid temperature of the dielectric working fluid L to be close to the body temperature of the wire electric discharge machine body 20.

Among the members included in the wire electric discharge machine body 20, the temperature of the column 76 manufactured as a casting is comparable to the body temperature of the wire electric discharge machine body 20 measured by the temperature sensor 160 attached to the bed 74. The temperature of the arm 90 connected to the column 76 is also comparable to the body temperature of the wire electric discharge machine body 20.

As described above, the dielectric working fluid L in the work-pan 100 is discharged to the reservoir 120 via the flow path 102 in the arm 90. The dielectric working fluid L is brought close to the temperature of the arm 90 and the column 76 in the flow path 102 inside the arm 90. That is, the dielectric working fluid L in the flow path 102 inside the arm 90 is brought close to the body temperature of the wire electric discharge machine body 20.

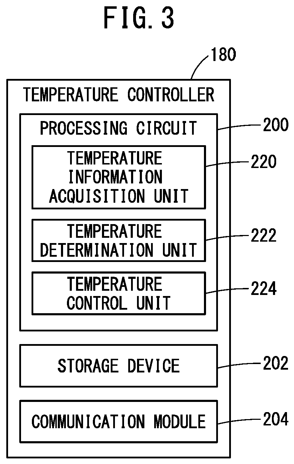

FIG. 3 is a block diagram illustrating a configuration of the temperature controller 180. The temperature controller 180 includes a processing circuit 200, a storage device 202, and a communication module 204. The processing circuit 200 includes a processor, such as a CPU or GPU. The storage device 202 includes volatile memory, such as RAM, and non-volatile memory, such as ROM or flash memory. The volatile memory is used as working memory for the processor. The non-volatile memory stores programs executed by the processor and other necessary data. The communication module 204 is used for wired or wireless communication.

The processing circuit 200 includes a temperature information acquisition unit 220, a temperature determination unit 222, and a temperature control unit 224. The processing circuit 200 executes programs stored in the storage device 202, thereby realizing the temperature information acquisition unit 220, the temperature determination unit 222, and the temperature control unit 224. At least part of the temperature information acquisition unit 220, the temperature determination unit 222, and the temperature control unit 224 may be realized by an integrated circuit such as an ASIC or an FPGA, or an electronic circuit including discrete devices.

The temperature information acquisition unit 220 acquires temperature information of the body temperature of the wire electric discharge machine body 20 from the temperature sensor 160 via the communication module 204. The temperature determination unit 222 determines the above-described target temperature based on the body temperature of the wire electric discharge machine body 20. The temperature determination unit 222 determines the target temperature to be, for example, a temperature equal to the body temperature of the wire electric discharge machine body 20.

The temperature control unit 224 controls the temperature regulator 130 to regulate to the target temperature the dielectric working fluid temperature of the dielectric working fluid L supplied from the reservoir 120 to the temperature regulator 130 by the first pump 140. The dielectric working fluid L whose temperature has been adjusted to the target temperature is returned to the reservoir 120 and then supplied to the work-pan 100 by the second pump 142 and the third pump 144.

The worktable 60, the workpiece W, the upper wire guide 62, and the lower wire guide 64 are immersed in the dielectric working fluid L whose temperature has been adjusted to the target temperature. The temperature of the workpiece W immersed in the dielectric working fluid L is adjusted to the target temperature corresponding to the body temperature of the wire electric discharge machine body 20. The temperatures of the first relative drive mechanism 68, the second relative drive mechanism 72, the third relative drive mechanism 80, the fourth relative drive mechanism 84, and the fifth relative drive mechanism 88 are temperatures corresponding to the body temperature of the wire electric discharge machine body 20. Therefore, the reduction of the machining accuracy of the electrical discharge machining is suppressed.

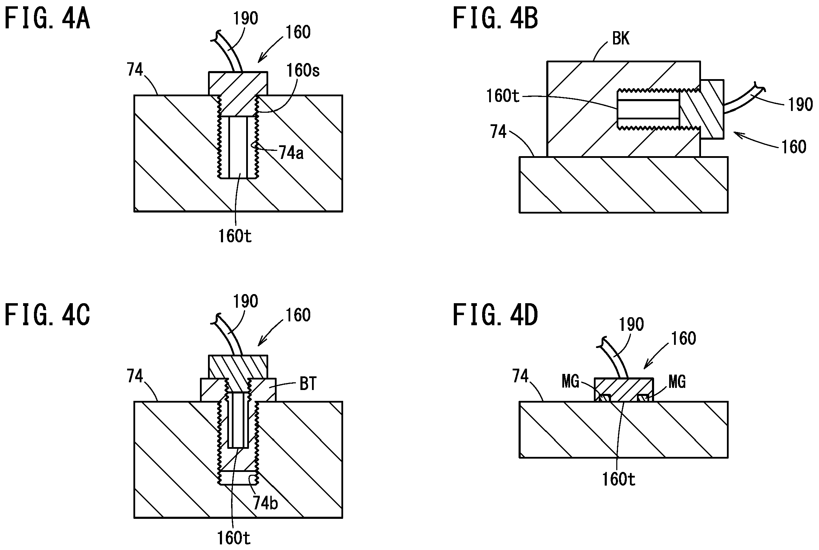

FIGS. 4A, 4B, 4C and 4D illustrate the state where the temperature sensor 160 is attached to the wire electric discharge machine body 20. As described above, in this embodiment, the temperature sensor 160 is coupled to the bed 74.

In the example shown in FIG. 4A, the temperature sensor 160 includes a threaded portion 160s and a sensor element 160t. A screw hole 74a is formed on a surface of the bed 74, which is a measurement target. The temperature sensor 160 is inserted into the screw hole 74a of the bed 74. The threaded portion 160s of the temperature sensor 160 is engaged with the screw hole 74a of the bed 74. Preferably, the sensor element 160t of the temperature sensor 160 contacts the bottom surface of the screw hole 74a of the bed 74. The temperature sensor 160 measures the temperature of the bed 74 with the sensor element 160t as the body temperature of the wire electric discharge machine body 20.

When the material constituting the outer surface of the bed 74, which is the measurement target, is thin, a deep screw holes 74a cannot be formed on the surface. In such a case, the temperature sensor 160 is attached to the wire electric discharge machine body 20, for example, in the manner shown in FIG. 4B. In the example shown in FIG. 4B, a block BK is attached to the surface of the bed 74 in a closely contacting manner. The temperature sensor 160 is attached to the block BK. Preferably, the sensor element 160t of the temperature sensor 160 contacts the block BK. The temperature sensor 160 measures the temperature of the bed 74 with the sensor element 160t via the block BK as the body temperature of the wire electric discharge machine body 20.

There is a case where a surface of the bed 74, which is the measurement target, is formed with a screw hole in advance for some applications. In the example shown in FIG. 4C, a screw hole 74b is formed on the surface of the bed 74. This screw hole 74b is too large for the temperature sensor 160 to be inserted. In that case, a bolt BT is inserted into the screw hole 74b. The temperature sensor 160 is attached to the bolt BT. Preferably, the sensor element 160t of the temperature sensor 160 is in contact with the bolt BT. The temperature sensor 160 measures the temperature of the bed 74 with the sensor element 160t via the bolt BT as the body temperature of the wire electric discharge machine body 20.

When the material constituting the outer surface of the bed 74, which is the measurement target, is a magnetic material, the temperature sensor 160 can be attached to the wire electric discharge machine body 20 using a magnet. In the example shown in FIG. 4D, a magnet MG is provided, together with the sensor element 160t, on the surface where the temperature sensor 160 is in contact with the bed 74. The magnetic force of the magnet MG attaches the temperature sensor 160 to the bed 74. Preferably, the sensor element 160t of the temperature sensor 160 is in contact with the bed 74. The temperature sensor 160 measures the temperature of the bed 74 with the sensor element 160t as the body temperature of the wire electric discharge machine body 20.

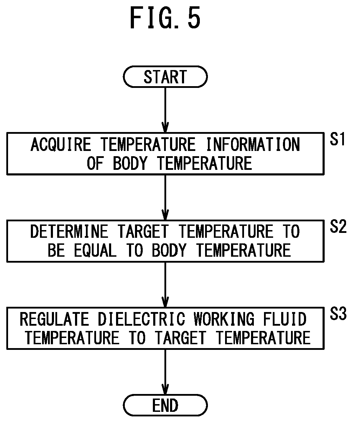

FIG. 5 is a flowchart showing an example of a processing procedure concerning temperature control of the dielectric working fluid L. The processing procedure is performed by the processing circuit 200 of the temperature controller 180 executing programs stored in the storage device 202, for example. When this processing procedure is started, in step S1, the temperature information acquisition unit 220 acquires temperature information of the body temperature of the wire electric discharge machine body 20 from the temperature sensor 160.

In step S2, the temperature determination unit 222 determines the target temperature to be equal to the body temperature of the wire electric discharge machine body 20. In step S3, the temperature control unit 224 controls the temperature regulator 130 to regulate to the target temperature the dielectric working fluid temperature of the dielectric working fluid L supplied from the reservoir 120 to the temperature regulator 130. When the process of step S3 is completed, the present processing procedure ends.

The temperature sensor 160 may be coupled to the column 76. The temperature of the column 76 is measured as the body temperature of the wire electric discharge machine body 20. As described above, the arm 90 is connected to the column 76. The dielectric working fluid L flows in the flow path 102 that the arm 90 encloses. By using as the body temperature the temperature of the column 76, which is at the same level of temperature as the arm 90 through which the dielectric working fluid L flows, it can become easier to appropriately adjust the dielectric working fluid temperature of the dielectric working fluid L**.**

In this embodiment, the temperature controller 180 controls the temperature regulator 130 to regulate the dielectric working fluid temperature of the dielectric working fluid L to a target temperature equal to the body temperature of the wire electric discharge machine body 20. Thus, the temperature of the workpiece W can be made close to the body temperature of the wire electric discharge machine body 20. Therefore, the machining accuracy of electric discharge machining is high.

### [Modified Examples]

The above embodiment may be modified as follows.

### (Modified example 1)

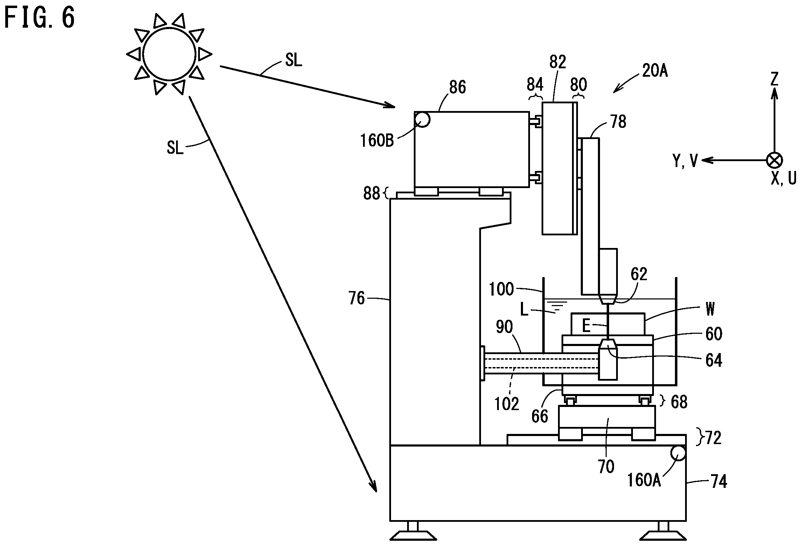

A plurality of temperature sensors 160 may be coupled to the wire electric discharge machine body 20. FIG. 6 is a diagram showing the arrangement of two temperature sensors 160A and 160B in the wire electric discharge machine body 20A. The wire electric discharge machine body 20A shown in FIG. 6 is not different from the wire electric discharge machine body 20 shown in FIG. 2 except that two temperature sensors 160A and 160B are arranged. Accordingly, the wire electric discharge machine body 20A shown in FIG. 6 shows components that are assigned the same reference numerals as the wire electric discharge machine body 20 shown in FIG. 2. The description of those components with the same reference numerals is omitted.

The temperature determination unit 222 determines a target temperature based on the body temperature of the wire electric discharge machine body 20A acquired from the two temperature sensors 160A and 160B. In the example shown in FIG. 6, one side surface of the wire electric discharge machine body 20A is irradiated with solar light SL. The temperature sensor 160A is not located in the irradiation range of the solar light SL. The temperature sensor 160B is located in the irradiation range of the solar light SL. In that case, it is possible that the body temperature measured with the temperature sensor 160B may become higher than the body temperature measured with the temperature sensor 160A due to solar heat.

In the example shown in FIG. 6, the relative movement between the wire electrode E and the workpiece W is performed outside the irradiation range of the solar light SL. It is assumed that the user operates an unillustrated operating device to select the body temperature acquired from the temperature sensor 160A out of the body temperatures acquired from the temperature sensors 160A and 160B.

In this case, the temperature determination unit 222 determines the body temperature selected by the user as the target temperature. That is, the body temperature acquired from the temperature sensor 160A is determined to be the target temperature. The same applies to the case where the air blow from an air conditioner is applied to one side surface of the wire electric discharge machine body 20A instead of the irradiation of the solar light SL.

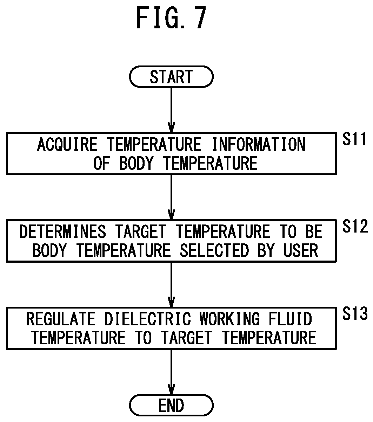

FIG. 7 is a flowchart showing an example of a processing procedure for temperature control of the dielectric working fluid L in the first modified example. The processing procedure is performed by the processing circuit 200 of the temperature controller 180 executing programs stored in the storage device 202, for example. When this processing procedure is started, in step S11, the temperature information acquisition unit 220 acquires temperature information of the body temperature of the wire electric discharge machine body 20A from the temperature sensors 160A and 160B. In step S11, only the body temperature selected by the user may be acquired.

In step S12, the temperature determination unit 222 determines the target temperature to be the body temperature selected by the user. In step S13, the temperature control unit 224 controls the temperature regulator 130 to regulate to the target temperature the dielectric working fluid temperature of the dielectric working fluid L supplied from the reservoir 120 to the temperature regulator 130. When the process of step S13 is completed, the present processing procedure ends.

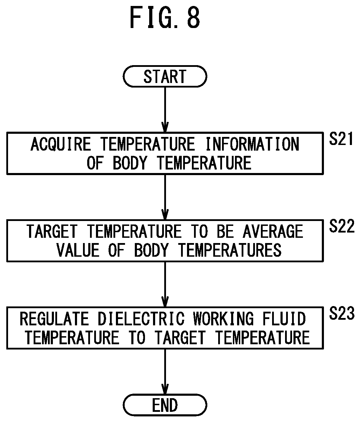

The temperature determination unit 222 may determine as the target temperature an average value of the body temperature acquired from the temperature sensor 160A and the body temperature acquired from the temperature sensor 160B. FIG. 8 is a flowchart showing another example of the processing procedure for temperature control of the dielectric working fluid L in the first modified example. The processing procedure is performed by the processing circuit 200 of the temperature controller 180 executing programs stored in the storage device 202, for example. When this processing procedure is started, in step S21, the temperature information acquisition unit 220 acquires temperature information of the body temperature of the wire electric discharge machine body 20A from the temperature sensors 160A and 160B.

In step S22, the temperature determination unit 222 determines the target temperature to be the average value of the body temperatures acquired from the temperature sensors 160A and 160B. In step S23, the temperature control unit 224 controls the temperature regulator 130 to regulate to the target temperature the dielectric working fluid temperature of the dielectric working fluid L supplied from the reservoir 120 to the temperature regulator 130. When the process of step S23 is completed, the present processing procedure ends.

In this variation, the temperature determination unit 222 determines the target temperature based on a plurality of body temperatures acquired by being measured by the plurality of temperature sensors 160A and 160B, respectively. Thus, the temperature of the workpiece W and the body temperature of the wire electric discharge machine body 20A can be prevented from being greatly deviated because of the influence of the installation environment of the wire electric discharge machine body 20A. Therefore, the high machining accuracy of the electric discharge machining is maintained.

### (Modified example 2)

The temperature sensor 160 may be coupled to the supporting portion of each relative drive mechanism. The relative movement between the wire electrode E and the workpiece W is realized by each relative drive mechanism. Therefore, it is preferable that the support portion temperature of the support portion of the relative drive mechanism that performs the relative movement is measured as the body temperature of the wire electric discharge machine body 20.

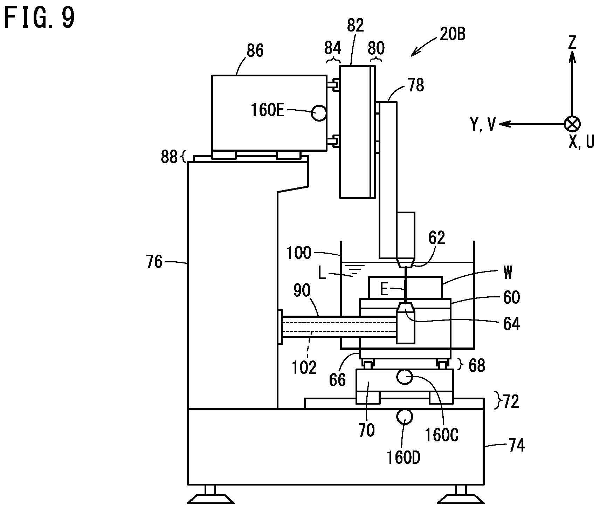

FIG. 9 is a diagram showing a state in which temperature sensors 160C, 160D, and 160E are coupled, in correspondence with a plurality of relative drive mechanisms, to the wire electric discharge machine body 20B. The wire electric discharge machine body 20B shown in FIG. 9 is not different from the wire electric discharge machine body 20 shown in FIG. 2 except that three temperature sensors 160C, 160D, and 160E are arranged. Accordingly, the wire electric discharge machine body 20B shown in FIG. 9 shows components assigned the same reference numerals as the wire electric discharge machine body 20 shown in FIG. 2. The description of those components with the same reference numerals is omitted.

The temperature sensor 160C is placed at the support position where the Y-axis table 70 supports the first relative drive mechanism 68. As described above, the Y-axis table 70 is the support portion of the first relative drive mechanism 68 that relatively moves the wire electrode E and the workpiece W in the X direction. Therefore, when the first relative drive mechanism 68 is being driven, the temperature determination unit 222 uses, as the body temperature, the support portion temperature measured by the temperature sensor 160C coupled to the Y-axis table 70 supporting the first relative drive mechanism 68. The temperature determination unit 222 determines the body temperature as the target temperature. That is, the support temperature acquired from the temperature sensor 160C is determined as the target temperature.

The temperature sensor 160D is placed at the support position where the bed 74 supports the second relative drive mechanism 72. As described above, the bed 74 is the support portion of the second relative drive mechanism 72 that relatively moves the wire electrode E and the workpiece W in the Y direction. Therefore, when the second relative drive mechanism 72 is being driven, the temperature determination unit 222 uses, as the body temperature, the support portion temperature measured by the temperature sensor 160D coupled to the bed 74 supporting the second relative drive mechanism 72. The temperature determination unit 222 determines the body temperature as the target temperature. That is, the support portion temperature acquired from the temperature sensor 160D is determined as the target temperature.

The temperature sensor 160E is placed at the support position where the V-axis saddle 86 supports the fourth relative drive mechanism 84. As described above, the V-axis saddle 86 is the support portion of the fourth relative drive mechanism 84 that relatively moves the upper wire guide 62 and the lower wire guide 64 in the U direction (X direction). When the fourth relative drive mechanism 84 is driven, the taper processing is performed on the workpiece W. In this case, the fifth relative drive mechanism 88 is also driven, and the upper wire guide 62 and the lower wire guide 64 are considered to relatively move in the V direction (Y direction).

Therefore, when the fourth relative drive mechanism 84 is being driven, the temperature determination unit 222 uses, as the body temperature, the support portion temperature measured by the temperature sensor 160E coupled to the V-axis saddle 86. The temperature determination unit 222 determines the body temperature as the target temperature. That is, the support temperature acquired from the temperature sensor 160E is determined as the target temperature.

It should be noted that yet another temperature sensor may be placed at the support position where the column 76 supports the fifth relative drive mechanism 88. In that case, when the fifth relative drive mechanism 88 is being driven, the temperature determination unit 222 can use, as the body temperature, the support portion temperature measured by its temperature sensor coupled to the column 76.

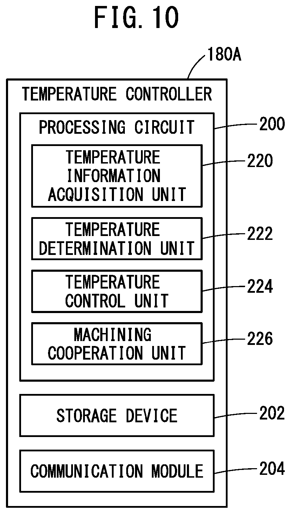

FIG. 10 is a block diagram illustrating the configuration of the temperature controller 180A. The temperature controller 180A shown in FIG. 10 is obtained by adding a machining cooperation unit 226 to the processing circuit 200 of the temperature controller 180 shown in FIG. 3. Accordingly, the temperature controller 180A shown in FIG. 10 includes components that are assigned the same reference numerals as the temperature controller 180 shown in FIG. 3. The description of those components with the same reference numerals is omitted.

The processing circuit 200 executes the program stored in the storage device 202, thereby realizing the machining cooperation unit 226. The machining cooperation unit 226 acquires the execution status of the machining program from the machining controller 32 via the communication module 204. When the execution status acquired by the machining cooperation unit 226 indicates that the wire electrode E and the workpiece W are relatively moving in the X direction, the temperature determination unit 222 determines the support portion temperature measured by the temperature sensor 160C as the target temperature.

When the execution status acquired by the machining cooperation unit 226 indicates that the wire electrode E and the workpiece W are relatively moving in the Y direction, the temperature determination unit 222 determines the support portion temperature measured by the temperature sensor 160D as the target temperature. When the execution status acquired by the machining cooperation unit 226 indicates that the upper wire guide 62 and the lower wire guide 64 are relatively moving in the U direction (X direction), the temperature determination unit 222 determines the support portion temperature measured by the temperature sensor 160E as the target temperature.

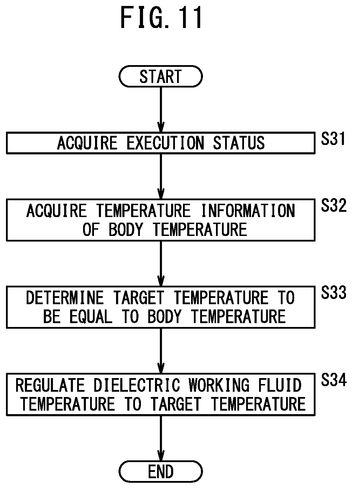

FIG. 11 is a flowchart showing an example of a processing procedure for temperature control of the dielectric working fluid L in the second modified example. The processing procedure is performed by the processing circuit 200 of the temperature controller 180A executing programs stored in the storage device 202, for example. When this processing procedure is started, in step S31, the machining cooperation unit 226 acquires the execution status of the machining program from the machining controller 32.

In step S32, the temperature information acquisition unit 220 acquires the temperature information of the body temperature of the wire electric discharge machine body 20B from any of the temperature sensors 160C, 160D, and 160E according to the execution status of the machining program. In step S33, the temperature determination unit 222 determines the target temperature to be equal to the body temperature of the wire electric discharge machine body 20B. In step S34, the temperature control unit 224 controls the temperature regulator 130 to regulate to the target temperature the dielectric working fluid temperature of the dielectric working fluid L supplied from the reservoir 120 to the temperature regulator 130. When the process of step S34 is completed, the present processing procedure ends.

It should be noted that there is a case where a plurality of relative drive mechanisms among the first relative drive mechanism 68, the second relative drive mechanism 72, and the fourth relative drive mechanism 84 (or the fifth relative drive mechanism 88) are driven simultaneously. In that case, in step S32, the temperature information acquisition unit 220 may acquire the temperature information of the body temperature of the wire electric discharge machine body 20B from a plurality of temperature sensors among the temperature sensors 160C, 160D, and 160E. In step S33, the temperature determination unit 222 determines a target temperature based on a plurality of body temperatures acquired from a plurality of temperature sensors. For example, the target temperature is determined to be the average value of the body temperatures.

In this variation, the temperature information acquisition unit 220 acquires temperature information of the body temperature of the wire electric discharge machine body 20B according to the execution status of the machining program. Thus, the temperature of the workpiece W and the body temperature of the wire electric discharge machine body 20B can be prevented from being greatly deviated from each other because of the influence of the processing state of the workpiece W**.** Therefore, the high machining accuracy of the electric discharge machining is maintained.

### (Modified example 3)

The above embodiments and variations may be combined arbitrarily.

In the above embodiment and modified example, the temperature controller 180 controls the temperature regulator 130 to adjust the dielectric working fluid temperature of the dielectric working fluid L to a target temperature corresponding to the body temperature of the wire electric discharge machine body 20. This suppresses the temperature of the workpiece W from deviating from the body temperature of the wire electric discharge machine body 20. Therefore, the machining accuracy of electric discharge machining is high.

With respect to the above embodiments and variations, the following Supplementary notes are further disclosed.

### (Supplementary note 1)

A wire electric discharge machining system (10) including a wire electric discharge machine body (20) for machining a workpiece (W) by generating electric discharge at an interelectrode gap between a wire electrode (E) and the workpiece in dielectric working fluid (L) stored in a work-pan (100) includes a temperature regulator (130) configured to regulate a dielectric working fluid temperature of the dielectric working fluid, a temperature sensor (160) configured to measure a body temperature of the wire electric discharge machine body, and a temperature controller (180) configured to control the temperature regulator to regulate the dielectric working fluid temperature to a target temperature corresponding to the body temperature.

### (Supplementary note 2)

The wire electric discharge machining system according to Supplementary note 1 may further include a circulating treatment device (40) configured to perform a predetermined treatment on the dielectric working fluid drained from the work-pan and return the dielectric working fluid to the work-pan, wherein the circulating treatment device may include the temperature regulator, and the temperature regulator may regulate the dielectric working fluid temperature of the dielectric working fluid as the predetermined treatment.

### (Supplementary note 3)

The wire electric discharge machining system described in Supplementary note 2**,** wherein the circulating treatment device may include a reservoir (120) configured to store the dielectric working fluid discharged from the work-pan, and the circulating treatment device may return the dielectric working fluid in the reservoir to the work-pan, supply the dielectric working fluid in the reservoir to the temperature regulator, and return to the reservoir the dielectric working fluid whose dielectric working fluid temperature has been regulated.

### (Supplementary note 4)

In the wire electric discharge machining system according to any of Supplementary notes 1 to 3**,** a plurality of the temperature sensors may be coupled to the wire electric discharge machine body, and the temperature controller may include a temperature determination unit (222) configured to determine the target temperature based on a plurality of the body temperatures acquired by being measured by the plurality of the temperature sensors, respectively, and a temperature control unit (224) configured to control the temperature regulator to adjust the dielectric working fluid temperature to the target temperature determined by the temperature determination unit.

### (Supplementary note 5)

In the wire electric discharge machining system according to Supplementary note 4, the temperature determination unit may determine an average value of the plurality of the body temperatures as the target temperature.

### (Supplementary note 6)

In the wire electric discharge machining system according to Supplementary note 4, the temperature determination unit may determine the body temperature selected by the user as the target temperature.

### (Supplementary note 7)

In the wire electric discharge machining system according to any of Supplementary notes 1 to 6**,** the wire electric discharge machining machine body may include a relative drive mechanism (68, 72, 84, 88) configured to relatively move the wire electrode and the workpiece, and a supporting portion (70, 74, 76, 86) configured to support the relative drive mechanism, and the temperature sensor may be coupled to the support portion, and measure the support portion temperature of the support portion as the body temperature.

### (Supplementary note 8)

In the wire electric discharge machining system according to Supplementary note 7, the relative drive mechanism may include a first drive mechanism (68) configured to move one of the wire electrode or the workpiece in a first direction, and a second drive mechanism (72) configured to move the one of the wire electrode or the workpiece in a second direction intersecting the first direction, the temperature sensors may be respectively coupled to the first drive mechanism and the second drive mechanism, the temperature sensor coupled to the first drive mechanism may measure the support portion temperature of the support portion supporting the first drive mechanism, the temperature sensor coupled to the second drive mechanism may measure the support portion temperature of the support portion supporting the second drive mechanism, and in a case where the first drive mechanism is driven, the temperature controller may use, as the body temperature, at least the support portion temperature measured by the temperature sensor coupled to the support portion supporting the first drive mechanism, and in a case where the second drive mechanism is driven, the temperature controller may use, as the body temperature, at least the support portion temperature measured by the temperature sensor coupled to the support portion supporting the second drive mechanism.

### (Supplementary note 9)

The wire electric discharge machining system according to Supplementary note 7 or 8, wherein the wire electric discharge machining machine body may include an arm (90) configured to support the wire electrode, and the arm may be connected to the support portion and include a flow path (102) into which the dielectric working fluid flows from the work-pan.

Although embodiments of the present disclosure have been described in detail, the present disclosure is not limited to the individual embodiments described above. These embodiments may be variously added, replaced, altered, partially deleted, etc. without departing from the scope of the present disclosure or the intent of the present disclosure as derived from the appended claims and their equivalents. These embodiments can also be implemented in combination. For example, in the above-described embodiments, the order of the operations and the order of the processes are shown as an example, and are not limited to these. The same applies to the case where numerical values or mathematical expressions are used in the description of the above-described embodiments.

### REFERENCE SIGNS LIST

- 10:: Wire electric discharge machining system
- 20:: Wire electric discharge machine body
- 30:: Machining power supply
- 32:: Machining controller
- 40:: Circulating treatment device
- 60:: Worktable
- 62:: Upper wire guide
- 64:: Lower wire guide
- 66:: X-axis table
- 68:: First relative drive mechanism
- 70:: Y-axis table
- 72:: Second relative drive mechanism
- 74:: Bed
- 76:: Column
- 78:: Z-axis slider
- 80:: Third relative drive mechanism
- 82:: U-axis saddle
- 84:: Fourth relative drive mechanism
- 86:: V-axis saddle
- 88:: Fifth relative drive mechanism
- 90:: Arm
- 100:: Work-pan
- 102:: Flow path
- 120:: Reservoir
- 130:: Temperature regulator
- 140:: First pump
- 142:: Second pump
- 144:: Third pump
- 160:: Temperature sensor
- 180:: Temperature controller
- 190:: Communication cable
- 200:: Processing circuit
- 202:: Storage device
- 204:: Communication module
- 220:: Temperature information acquisition unit
- 222:: Temperature determination unit
- 224:: Temperature control unit
- 226:: Machining cooperation unit

## Claims

1. A wire electric discharge machining system comprising a wire electric discharge machine body for machining a workpiece by generating electric discharge at an interelectrode gap between a wire electrode and the workpiece in dielectric working fluid stored in a work-pan, the system comprising:
a temperature regulator configured to regulate a dielectric working fluid temperature of the dielectric working fluid;
a temperature sensor configured to measure a body temperature of the wire electric discharge machine body; and
a temperature controller configured to control the temperature regulator to regulate the dielectric working fluid temperature to a target temperature corresponding to the body temperature.

2. The wire electric discharge machining system according to claim 1, further comprising
a circulating treatment device configured to perform a predetermined treatment on the dielectric working fluid drained from the work-pan and return the dielectric working fluid to the work-pan,
wherein
the circulating treatment device includes the temperature regulator, and
the temperature regulator regulates the dielectric working fluid temperature of the dielectric working fluid as the predetermined treatment.

3. The wire electric discharge machining system according to claim 2, wherein
the circulating treatment device includes a reservoir configured to store the dielectric working fluid discharged from the work-pan, and
the circulating treatment device returns the dielectric working fluid in the reservoir to the work-pan, and in addition supplies the dielectric working fluid in the reservoir to the temperature regulator and returns to the reservoir the dielectric working fluid whose dielectric working fluid temperature has been regulated.

4. The wire electric discharge machining system according to any one of claims 1 to 3, wherein
a plurality of the temperature sensors are coupled to the wire electric discharge machine body,
the temperature controller includes:
a temperature determination unit configured to determine the target temperature based on a plurality of the body temperatures acquired by being measured by a plurality of the temperature sensors, respectively; and
a temperature control unit configured to control the temperature regulator to regulate the dielectric working fluid temperature to the target temperature determined by the temperature determination unit.

5. The wire electric discharge machining system according to claim 4, wherein
the temperature determination unit determines an average value of the plurality of the body temperatures as the target temperature.

6. The wire electric discharge machining system according to claim 4, wherein
the temperature determination unit determines the body temperature selected by a user as the target temperature.

7. The wire electric discharge machining system according to any one of claims 1 to 6, wherein
the wire electric discharge machine body includes:
a relative drive mechanism configured to relatively move the wire electrode and the workpiece; and
a support portion configured to support the relative drive mechanism, and
the temperature sensor is coupled to the support portion and measures a support portion temperature of the support portion as the body temperature.

8. The wire electric discharge machining system according to claim 7, wherein
the relative drive mechanism includes:
a first drive mechanism configured to move one of the wire electrode or the workpiece in a first direction; and
a second drive mechanism configured to move the one of the wire electrode or the workpiece in a second direction intersecting the first direction,
the temperature sensors are respectively coupled to the first drive mechanism and the second drive mechanism,
the temperature sensor coupled to the first drive mechanism measures the support portion temperature of the support portion supporting the first drive mechanism,
the temperature sensor coupled to the second drive mechanism measures the support portion temperature of the support portion supporting the second drive mechanism,
in a case where the first drive mechanism is driven, the temperature controller uses, as the body temperature, at least the support portion temperature measured by the temperature sensor coupled to the support portion supporting the first drive mechanism, and
in a case where the second drive mechanism is driven, the temperature controller uses, as the body temperature, at least the support portion temperature measured by the temperature sensor coupled to the support portion supporting the second drive mechanism.

9. The wire electric discharge machining system according to claim 7 or 8, wherein
the wire electric discharge machine body includes an arm configured to support the wire electrode, and
the arm is connected to the support portion and includes a flow path into which the dielectric working fluid flows from the work-pan.
